Europäisches Patentamt

**European Patent Office**

Office européen des brevets

(11) Publication number: **0 010 338**
A1

(12) **EUROPEAN PATENT APPLICATION**

(21) Application number: **79200598.5**

(22) Date of filing: **17.10.79**

(51) Int. Cl.³: **B 01 D 29/22**
B 01 D 29/38, B 01 D 25/16
B 29 F 3/00, B 29 F 1/00

(30) Priority: **20.10.78 NL 7810524**

(43) Date of publication of application:
**30.04.80 Bulletin 80/9**

(84) Designated Contracting States:
**AT BE CH DE FR GB IT LU NL SE**

(71) Applicant: **Ter Beek, Gerrit Jan**
**Binnenhavenstraat 63**
**NL-7553 GH Hengelo(NL)**

(72) Inventor: **Ter Beek, Gerrit Jan**
**Binnenhavenstraat 63**
**NL-7553 GH Hengelo(NL)**

(74) Representative: **Keppels, Willem Richard Engelbertus**
**Gerardus et al,**
**OCTROOIBUREAU ARNOLD & SIEDSMA**
**Sweelinckplein 1**
**NL-2517 GK The Hague(NL)**

㊔ **Filter.**

㊗ A filter for filtering viscous liquids and particularly molten synthetic resins comprising a house (1, 2) with an inletport (3), an outlet port (4) and a chamber defined therein having an inner surface (6) which is partly shaped as a revolutional surface. The chamber accomodates a concentric smooth straped revolutional body (7) while defining an annular slit (8) between said body and the house, through shich slit the material to be filtered is to be passed. The smooth shape of the body prevents congestion of the hot resins and any thermal degradation.

FIG. 1

EP 0 010 338 A1

Croydon Printing Company Ltd.

-1-

Short title: Filter

The invention relates to a filter, comprising a house having an inletport and an outlet port, a chamber between these ports having an inner surface being at least partly shaped as a revolutional surface, the chamber enclosing a concentric core being shaped as a revolutional body.

A filter of this design is disclosed in Dutch specification 4287 and is formed by a house having an inlet and an outlet port and having a cylindrical bore as a chamber, in which chamber a disc shaped core having a slightly smaller diameter than the bore is supported by means of two coaxial pins. This filter is readily applicable, though is not suited for filtering heat plasticised synthetic resins prior to feeding such resins to an extruder, since for reason of the irregular shape of the path of flow through the house and about the core the synthetic resins are too long exposed to the high temperature and will degrade. Moreover the flow resistance will be too high for sufficiently quick filtering plasticized synthetic resins.

The invention provides a filter of the kind set forth hereinbefore, which in order to obviate these objections is characterised in that the generatrix (generating line) of the core has predominantly a smooth shape. In particular the core is mainly spherical, giving the advantage of a favourable flow resistance and a relatively low price of it. For that reasons a sphere is preferred as core.

In this connection is remarked that US specification 3,767,056 discloses a filter for filtering heat plasticised synthetic resins. This filter is meant for use in combination with extruders, in which synthetic resins at increased temperatures and under high pressure are moulded and comprises a house having an inlet and an outlet port defining a cylindrical bore in which a hollow cylindrical core which at one end is closed is such positioned that the flow of synthetic resin is forced through a plurality of tapered bores extending in radial direction in the wall of the core. Manufacturing such filter is expensive, the constructional length with respect to the free passage is great and the flow resistance is important caused by the tortuous flow path. Finally at several places in this filter the synthetic resin is prevented from flowing through, thereby increasing the dwelling time and increasing the risk of decomposition.

In a modified embodiment of the invention the core is rotable about an axis being at square angles to the axis of revolution of the revolutional surface of the house and lying within the spherical surface defined by rotation of the largest circular section of the core about said axis of revolution and for the rest coinciding with that spherical surface. This embodiment is advantageous in that by rotating the core possible solid contaminations can be removed without the need of taking down the filter or removing it from the apparatus for working synthetic resin.

For improving the flow resistance the inlet port, the outletport, the chamber and the core are preferable coaxially arranged. In connection with a favourable centering and support of the core this core is preferably supported at the side to the outlet port by at least three point-shaped supporting elements, being particularly regularly distributed around the axis of revolution.

If a loose core is arranged in the house, it may be advan-

0010338

tageous to have this core reliably centered by providing
at least three internal projections on the inner revolutional surface of the chamber, which projections for a favourable distribution of the forces preferable also are regularly distributed around the revolution axis. It will be evident
that such projections may be arranged on the core too or
may be substituted by seperate spacers, although for reasons
of constructions the first embodiment is to be preferred.

The invention will be explained in connection with the
drawing of two preferred embodiments of the invention.
    Fig. 1 is an axial secion through a filter according to the
        invention
    Fig. 2 is a transverse section along the line II - II in fig.1
    Fig. 3 is an axial section through a modified embodiment of
        a filter according to the invention.

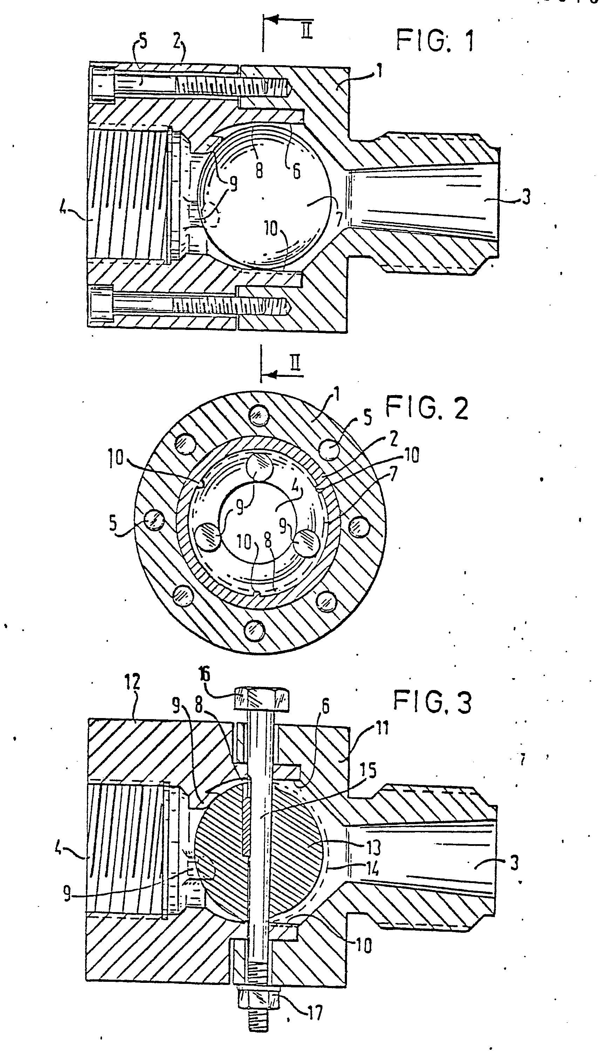

Fig. 1 shows a filter according to the invention, comprising
a house being composed of two parts 1, 2, the one part 1
of which comprising the inlet port 3 and the other part 2
comprising the outlet port 4. Both parts are in a usual
manner provided with connecting means, such as screw thread,
for connecting the filter to a working apparatus. Both
parts 1, 2 are mutually connected by means of bolts 5. Between
said parts a spherical core 7 is enclosed in a chamber having an inner surface being a revolutional surface 6. The
core has a slightly smaller diameter than the chamber has.
For delimiting an even slit 8 between the inner surface 6
of the chamber and the core 7 the part 2 of the house is
provided at the side to the outlet port 4 with three point-
shaped projections 9 supporting the core 7. For a very precise centering of the core three internal projection 10
may be arranged on the inner surface 6 of the chamber, which
projections will not be always necessary. It is evident that
both the point-shaped projections 9 and the internal projections 10 are preferably regularly distributed around
the center line of the filter, in which case usually three
of each will be sufficient. This arrangement is clearly shown in fig. 2, representing a transverse section along the line
II - II in fig. 1, the spherical core being only indicated
with a broken line.

Fig. 3 shows a modified embodiment of the filter as shown
in fig. 1; corresponding parts have been identified by the
same reference numerals as used in fig. 1.

Both parts 11, 12 of the house are again interconnected by
bolts 5 and are together defining a chamber having an inlet
port 3 and an outlet port 4. In the chamber, the inner sur-
face 6 of which being shaped as a revolutional surface, a
for the greater part ball shaped or spherical core 13 is
accomodated. It is true that the side of the core being
directed towards the inlet port 3 is spherical although it
is within the surface 14 being described by rotating the
largest circular section of said core about an axis being
at square angles to the centre line of the filter. The core
in this embodiment is supported on a conical shaft 15 and
mutually inrotatably connected thereto by means of a key.
The shaft 15 is rotatably supported in the house and extends
with both ends from said house. The one end of the shaft 15
is provided with a suitable operating means, such as a
hexagonal head 16, for easily rotating the shaft  15.

By rotating the head 16 a  quarter-turn that part of the
core having a smaller diameter is directed to the inner
wall of the chamber, thereby widening the slit between the
core and the inner wall, so that the solids held back by
the filter can be forced through. By thereafter rotating
the head 16 a half-turn in the reverse direction the other
side of the filter can be cleaned as well after which the
filter may be made ready for use again by putting the head
in its original position and tightening the nut 17 which is
arranged on the screw threaded end of the shaft 15 remote
from the head 16 such that any play between the shaft 15 and
the house is removed.

Although in the drawing spherical or almost spherical bodies are shown as cores, which shapes are to be preferred in view of the flow resistance and their manufacture, it may be understood that several other streamlined cores can be used.

-1-

Claims

1. Filter comprising a house having an inletport and an outlet port, a chamber between these ports having an inner
surface being at least partly shaped as a revolution surface,
the chamber enclosing a concentric core, being shaped as a
revolutional body, the core and the house delimiting an
annular slit, characterised in the generatrix of the core (7,
13) having predominantly a smooth shape.

2. Filter according to claim 1, characterised in the core (13)
being mainly spherical.

3. Filter according to claim 1, characterised in the core (7)
being essentially spherical.

4. Filter according to claim 2 or 3, characterised in the core
(13) being rotatable about an axis being at square angles
to the axis of revolution of the revolutional surface of the
house and lying within the spherical surface (14) defined by
rotation of the largest circular section of the core about
the axis of revolution and for the rest coinciding with that
spherical surface.

5. Filter according to any claim 1 to 4, characterised in the
inletport (3), the outlet port (4), the chamber and the core
(7, 13) being coaxial.

6. Filter according to any claim 1 to 5, characterised in

0010338

the core being supported at the side of the outlet port (4) by at least three point-shaped supporting elements (9).

7. Filter according to claim 6, characterised in the three supporting elements being regularly distributed around the revolution axis.

8. Filter according to any claim 1 to 7, characterised in the inner revolutional surface of the chamber being provided . with at least three internal projections (10).

.0010338

FIG. 1

FIG. 2

FIG. 3

0010338

**European Patent Office**

**EUROPEAN SEARCH REPORT**

Application number

EP 79 20 0598

| DOCUMENTS CONSIDERED TO BE RELEVANT | | | CLASSIFICATION OF THE APPLICATION (Int. Cl. 3) |
|---|---|---|---|
| Category | Citation of document with indication. where appropriate, of relevant passages | Relevant to claim | |
| | US - A - 1 446 573 (R.T. LIGHTFOOT)<br>* Pages 1,2 *<br><br>--<br><br>US - A - 3 312 349 (ROSAEN)<br>* Column 2, lines 42-72; column 3 *<br><br>--<br><br>US - A - 3 499 536 (DAVID COHEN)<br>* Column 3, lines 34-36; columns 5,6 *<br><br>---- | 1-3<br><br><br><br>1-3<br><br><br><br><br>1 | B 01 D 29/22<br>         29/38<br>         25/16<br>B 29 F    3/00<br>B 29 F    1/00 |

**TECHNICAL FIELDS SEARCHED (Int.Cl. 3)**

B 01 D 29/22
        29/38
        25/16
B 29 F   3/00
B 29 F   1/00

The present search report has been drawn up for all claims

| Place of search | Date of completion of the search | Examiner |
|---|---|---|
| The Hague | 22-01-1980 | DE PAEPE |

EPO Form 1503.1 06.78